# FASCICULE DE BREVET EUROPEEN

(11) **EP 2 377 737 B1**
(45) Date de publication et mention de la délivrance du brevet: **20.03.2013**
(21) Numéro de dépôt: 11151826.2
(22) Date de dépôt: 24.01.2011
(51) Int. Cl.: B60T 13/74, B60T 17/22, B60R 16/023

(54) **Ensemble hydraulique de freinage d'un véhicule comprenant un capteur de niveau de fluide hydraulique**
Hydraulische Bremseinheit eines Kraftfahrzeugs, umfassend einen Füllstandsensor für die hydraulische Flüssigkeit
Hydraulic brake unit for vehicles including a fluid level sensor

(30) Priorité: 14.04.2010 FR 1001590
(43) Date de publication de la demande: 19.10.2011
(73) Titulaire: Robert Bosch GmbH, 70442 Stuttgart (DE)
(72) Inventeur: Maury, Vincent, 93210 La Plaine Saint Denis (FR); L'Aot, Jean-Michel, 93240, STAINS (FR); Richard, Philippe, 77500, CHELLES (FR); Gaffe, François, 44420, La Turballe (FR); Cagnac, Bastien, 60660 Cramoisy (FR); Auguste, Antony, 94350, Villier Sur Marne (FR)

(56) Documents cités:
- WO-A1-01/38152
- WO-A1-2010/006996
- WO-A2-2005/024414
- DE-A1-102007 023 070
- FR-A1- 2 860 474

## Description

L'invention concerne un ensemble hydraulique de freinage d'un véhicule comprenant un réservoir de fluide hydraulique, lequel réservoir étant équipé d'un capteur de niveau de fluide hydraulique. WO 01/38152 décrit un ensemble hydraulique de freinage d'un véhicule. L'invention a pour but de simplifier le montage d'un ensemble hydraulique de freinage. L'invention a également pour but de diminuer le coût de fabrication de cet ensemble hydraulique.

L'invention peut s'appliquer dans le domaine de l'automobile mais pourrait s'appliquer dans d'autres domaines.

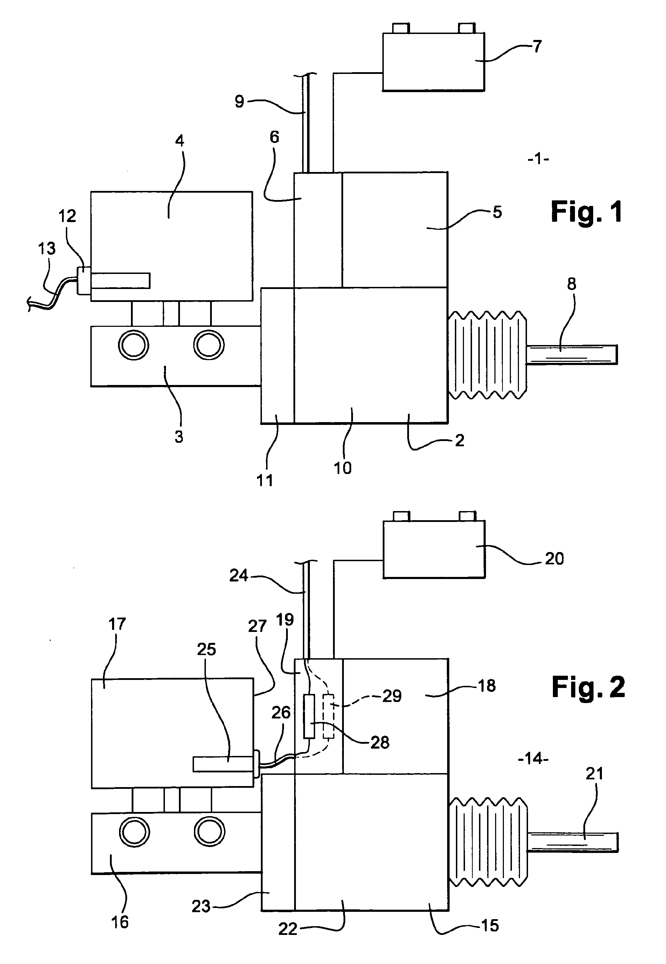

La figure 1 illustre schématiquement un ensemble hydraulique de freinage 1 de l'état de la technique. Cet ensemble hydraulique de freinage 1 est formé par un servomoteur électrique 2 d'assistance de freinage, un maître cylindre hydraulique 3, un réservoir 4 de fluide hydraulique et au moins un circuit hydraulique de freinage (non représenté). Le servomoteur 2 comprend un moteur électrique 5, un calculateur 6 et une batterie 7. Le calculateur 6 forme un dispositif électronique de commande et est relié à la batterie 7. Une pédale de frein (non représentée) est reliée à une tige de commande 8, elle-même reliée mécaniquement au servomoteur 2. Le calculateur 6 est également relié à un organe central de commande (non représenté) par un premier câble 9. L'organe central de commande récolte l'ensemble des données électroniques du véhicule. L'organe central de commande peut comporter un tableau de bord vers lequel le premier câble 9 se lie au moyen d'un bus de type CAN (Controller Area Network).

Le réservoir 4 est monté sur le maître cylindre 3 pour alimenter en fluide au moins une chambre (non représentée) du maître cylindre 3. Le circuit hydraulique de freinage relie la chambre du maître cylindre 3 à un dispositif de freinage (non représenté) monté sur une roue d'un véhicule.

Le servomoteur électrique 2 comporte un ensemble vis écrou 10 transformant un mouvement de rotation de l'écrou formant rotor du moteur électrique 5 en un mouvement de rotation de la vis venant déplacer en direction du maître cylindre 3 un piston d'assistance 11. Le servomoteur 2 est actionné par la tige de commande 8 déplacée par la pédale de frein. Un capteur d'efforts (non représenté) mesure l'effort appliqué à la tige de commande 8 par le conducteur par l'intermédiaire de la pédale de frein. L'information de l'effort appliquée à la tige de commande 8 est transmise au calculateur 6. Ce calculateur 6 génère donc sur la base de cette information un ordre de commande au moteur électrique 5 de manière à déplacer le piston d'assistance 11 en correspondance avec l'effort exercé sur la tige de commande 8.

Le réservoir 4 de fluide contient une quantité de fluide hydraulique permettant d'alimenter en permanence la chambre du maître cylindre 3.

Un capteur 12 de niveau de fluide hydraulique est placé à l'intérieur de ce réservoir 4. Ce capteur 12 est dans un exemple du type ampoule REED ou du type à effet HALL (ou capteur magnétique de proximité). Dans le cas d'un capteur à ampoule REED, il est formé par deux lamelles électromagnétiques et par un électroaimant. Les deux lamelles sont au contact l'une de l'autre tant que l'électroaimant est placé au-dessus des lamelles, c'est-à-dire que le niveau de fluide est au-dessus des lamelles. Lorsque l'électroaimant s'approche des lamelles, elles finissent par s'écarter du fait de la proximité de l'électroaimant tendant à faire écarter les lamelles l'une de l'autre. Le contact électrique est donc rompu et cette information est transmise au conducteur via un signal lumineux et/ou sonore s'effectuant sur un tableau de bord.

Le capteur 12 est relié électriquement à l'organe central de commande par un deuxième câble 13. L'organe central de commande peut également comporter un calculateur central vers lequel se lie le deuxième câble 13.

Un premier câble 9 et un deuxième câble 13 sont donc nécessaires pour raccorder l'ensemble hydraulique de freinage 1 à l'organe central de commande. Le problème est que le deuxième câble 13 est encombrant, il peut mesurer jusqu'à 50 cm pour atteindre l'organe central de commande. Ce deuxième câble 13 peut être attrapé par inadvertance lorsque l'on est amené à ouvrir le capot du véhicule pour contrôler l'état d'au moins un organe du véhicule ou pour réparer au moins un organe. Ce deuxième câble 13 peut alors être sectionné ou au moins gêner l'opérateur. Pour éviter que ce deuxième câble 13 puisse gêner, il peut être disposé de façon maitrisée à l'intérieur de l'espace fermé par le capot du véhicule. Pour ce faire, ce deuxième câble 13 peut être plaqué contre une paroi du tablier tout en étant agrafé, ou bien plaqué par collage ou agrafage contre une autre paroi d'un organe du véhicule. Cependant, la surface de certaines zones du tablier (celles exposées aux variations climatiques externes) ou la surface d'un organe donné, peut être soumis à des variations de températures qui peuvent nuire à la qualité de ce deuxième câble 13. Notamment, la chaleur ou le froid peuvent nuire au bon fonctionnement et/ou à une usure prématurée de ce deuxième câble 13. Il faut donc prendre soin de choisir les bons endroits, c'est-à-dire ceux qui présentent le moins de risque de nuire à la qualité de ce deuxième câble 13.

Le montage d'un tel deuxième câble en est donc rendu délicat, fastidieux et coûteux.

L'invention a donc pour objet de remédier à ce problème.

Plus particulièrement, selon l'invention, le capteur de niveau n'est plus relié directement à l'organe central de commande mais au calculateur du servomoteur. De cette manière, il n'est plus nécessaire de prévoir le deuxième câble. Seul un troisième câble qui relie directement le capteur au calculateur du servomoteur est prévu selon l'invention. La longueur de ce troisième câble est grandement réduite par rapport à celle du deuxième câble puisque le calculateur du servomoteur est situé à proximité du réservoir hydraulique.

Ainsi, l'ensemble hydraulique forme donc un ensemble monobloc qui peut être relié par un seul câble à l'organe central de commande.

L'invention permet également au constructeur du véhicule d'être maître de la technologie associée au capteur de niveau et au calculateur du servomoteur. Le constructeur peut être à l'origine de la conception du logiciel susceptible de recevoir et de gérer l'information transmise par le capteur. Le constructeur pourra être libre de choisir quel type de capteur il souhaite monter en fonction du type d'applications fournies par tel type de capteur, du coût, et du type de véhicule. Le constructeur ne sera plus dépendant du calculateur central de l'organe central de commande pour choisir le capteur.

L'invention permet au constructeur du véhicule d'avoir le choix quant à l'emplacement du capteur dans le réservoir et surtout d'avoir le choix quant au type de capteur à installer.

L'invention a donc pour objet un ensemble hydraulique de freinage d'un véhicule comportant
- un servomoteur électrique comprenant un moteur électrique et un calculateur, le calculateur étant relié à un organe central de commande par un premier câble et permettant d'actionner le moteur électrique lorsqu'une pédale de frein est actionnée par un conducteur,
- un maître cylindre relié au servomoteur par un piston d'assistance actionné par le moteur du servomoteur,
- un réservoir de fluide hydraulique monté sur le maître cylindre, ledit réservoir communiquant avec une chambre du maître cylindre pour alimenter le maître cylindre en fluide hydraulique,
- un capteur de niveau de fluide hydraulique situé dans une paroi du réservoir de fluide pour contrôler le niveau de fluide hydraulique à l'intérieur du réservoir, caractérisé en ce que
- le capteur de niveau de fluide est relié depuis le réservoir vers le calculateur du servomoteur électrique par un moyen de connexion.

L'invention sera mieux comprise à la lecture de la description qui suit et à l'examen de la figure qui l'accompagne. Celle-ci n'est présentée qu'à titre indicatif et nullement limitatif de l'invention.
- Figure 2: Une représentation schématique d'un ensemble hydraulique de freinage comprenant un capteur de niveau de fluide, selon l'invention.

La figure 2 illustre un autre ensemble hydraulique de freinage 14 d'un véhicule, selon l'invention. Comme pour l'ensemble hydraulique 1 décrit figure 1, cet autre ensemble hydraulique 14 comporte un servomoteur électrique 15 d'assistance de freinage, un maître cylindre 16, un réservoir de fluide hydraulique 17 et au moins un circuit hydraulique de freinage (non représenté). Le servomoteur 15 comprend un moteur électrique 18 et un calculateur 19. Le calculateur 19 forme un dispositif électronique de commande et est relié à une batterie 20. Le calculateur 19 est également relié à un organe central de commande (non représenté). L'organe central de commande comprend un tableau de bord. Le calculateur 19 peut être relié au tableau de bord par un bus du type CAN. Le calculateur 19 est plus particulièrement relié à l'organe central de commande via le bus par un premier câble 24.

Une pédale de frein (non représentée) est reliée à une tige de commande 21, elle-même reliée mécaniquement au servomoteur 15.

Le réservoir 17 est monté sur le maître cylindre 16 pour alimenter en fluide au moins une chambre (non représentée) du maître cylindre 16. Le circuit hydraulique de freinage relie la chambre du maître cylindre 16 à un dispositif de freinage (non représenté) monté sur une roue d'un véhicule. Le dispositif de freinage peut être un frein à disque ou bien un frein à tambour.

Le servomoteur électrique 15 comporte un ensemble vis écrou 22 transformant un mouvement de rotation de l'écrou formant rotor du moteur électrique 18 en un mouvement de rotation de la vis venant déplacer en direction du maître cylindre un piston d'assistance 23. Le servomoteur 15 est actionné par la tige de commande 21 déplacée par la pédale de frein. Comme pour l'ensemble hydraulique 1 décrit figure 1, un capteur d'efforts (non représenté) mesure l'effort appliqué à la tige de commande 21 par le conducteur par l'intermédiaire de la pédale de frein.

Le réservoir 17 de fluide contient une quantité de fluide permettant d'alimenter la chambre du maître cylindre 16. Le réservoir 17 alimente en fluide le maître cylindre de telle manière que la pression exercée par le piston d'assistance 23 sur ce fluide puisse permettre un rapprochement suffisant des plaquettes de frein par rapport au disque ou par rapport au plateau du tambour afin d'entraîner un freinage du véhicule.

Un capteur 25 de niveau de fluide hydraulique est placé à l'intérieur de ce réservoir 17. Comme précédemment mentionné, ce capteur 25 peut être du type ampoule REED, ou bien du type à effet HALL ou tout autre type de capteur convenant pour ce type d'application.

Le capteur de niveau 25 est placé au travers de la paroi du réservoir 17 de manière étanche de telle façon qu'il communique avec le fluide à l'intérieur du réservoir 17.

Selon l'invention, le capteur de niveau 25 est relié au calculateur 19 de l'ensemble hydraulique 14 par un deuxième câble 26 ou tout autre moyen de connexion 26 rigide ou non.

Le capteur de niveau 25 est situé à proximité du calculateur 19, c'est-à-dire que son emplacement au travers de la paroi du réservoir 17 est optimisé de façon à ce que la longueur du deuxième câble 26 qui relie le capteur de niveau 25 au calculateur 19 soit la plus courte possible. Dans un exemple, la longueur de ce deuxième câble 26 est comprise entre 2 à 6 cm, de préférence 3 cm.

Plus précisément, le réservoir 17 comporte une face 27 tournée vers le calculateur 19. Le capteur 19 est logé dans une paroi du réservoir 17 de telle manière que le deuxième câble 26 sorte de cette face 27.

Lorsque le niveau de fluide atteint un niveau qui est détecté par le capteur de niveau 25, il se produit un signal qui est envoyé depuis le capteur 25 vers le calculateur 19 via le deuxième câble 26.

Le calculateur 19 comporte des premiers types de circuits 28 pour transmettre le signal du capteur 25 à l'organe central de commande. C'est l'organe central de commande qui traite alors l'information.

Le calculateur 19 peut comporter également des deuxièmes types de circuits 29 pour recevoir et traiter le signal du capteur 25, ces mêmes deuxièmes types de circuits transmettant ensuite à l'organe central de commande les signaux traités.

Le signal transmis par le capteur 25 peut être ensuite communiqué au conducteur via un voyant sonore et/ou lumineux sur le tableau de bord.

## Revendications

1. Ensemble hydraulique de freinage (14) d'un véhicule comportant
- un servomoteur électrique (15) comprenant un moteur électrique (22) et un calculateur (19), le calculateur étant relié à un organe central de commande par un premier câble (24) et permettant d'actionner le moteur électrique lorsqu'une pédale de frein est actionnée par un conducteur,
- un maître cylindre (16) relié au servomoteur par un piston d'assistance (23) actionné par le moteur du servomoteur,
- un réservoir (17) de fluide hydraulique monté sur le maître cylindre, ledit réservoir communiquant avec une chambre du maître cylindre pour alimenter le maître cylindre en fluide hydraulique,
- un capteur (25) de niveau de fluide hydraulique situé dans une paroi du réservoir de fluide pour contrôler le niveau de fluide hydraulique à l'intérieur du réservoir, **caractérisé en ce que**
- le capteur de niveau de fluide est relié depuis le réservoir vers le calculateur du servomoteur électrique par un moyen de connexion (26).

2. Ensemble hydraulique de freinage selon la revendication 1, **caractérisé en ce que** le calculateur du servomoteur comporte des circuits pour transmettre le signal du capteur à l'organe central de commande.

3. Ensemble hydraulique de freinage selon l'une des revendications 1 à 2, **caractérisé en ce que** le calculateur du servomoteur comporte des circuits pour traiter le signal du capteur et transmettre à l'organe central de commande des signaux traités.

4. Ensemble hydraulique selon l'une des revendications 1 à 3, **caractérisé en ce que** le réservoir comporte une face tournée vers le calculateur, le deuxième câble sortant de cette face.

## Claims

1. Hydraulic brake unit (14) for a vehicle comprising
- an electric servo motor (15) comprising an electric motor (22) and a computer (19), the computer being connected to a central unit by a first cable (24) and allowing the electric motor to be actuated when a brake pedal is actuated by a driver,
- a master cylinder (16) connected to the servo motor by a boost piston (23) actuated by the motor of the servo motor,
- a hydraulic fluid reservoir (17) mounted on the master cylinder, the said reservoir communicating with one chamber of the master cylinder in order to supply the master cylinder with hydraulic fluid,
- a hydraulic fluid level sensor (25) situated in one wall of the fluid reservoir in order to monitor the level of hydraulic fluid in the reservoir, **characterized in that**
- the fluid level sensor is connected from the reservoir to the computer of the electric servo motor by a connection means (26).

2. Hydraulic brake unit according to Claim 1, **characterized in that** the computer of the servo motor comprises circuits for transmitting the signal from the sensor to the central control unit.

3. Hydraulic brake unit according to one of Claims 1 and 2, **characterized in that** the computer of the servo motor comprises circuits for processing the signal from the sensor and transmitting processed signals to the central control unit.

4. Hydraulic unit according to one of Claims 1 to 3, **characterized in that** the reservoir has one face facing towards the computer, the second cable emerging from this face.

## Patentansprüche

1. Hydraulische Bremsanordnung (14) für ein Fahrzeug, umfassend
- einen elektrischen Stellmotor (15), der einen Elektromotor (22) und einen Rechner (19) aufweist, wobei der Rechner über ein erstes Kabel (24) mit einer zentralen Steuereinheit verbunden ist und die Betätigung des Elektromotors bei Betätigung eines Bremspedals durch einen Fahrer ermöglicht,
- einen Hauptzylinder (16), der über einen durch den Motor des Stellmotors betätigten Hilfskolben (23) mit dem Stellmotor verbunden ist,
- einen Behälter (17) für Hydraulikfluid, der an dem Hauptzylinder angebracht ist, wobei der Behälter mit einer Kammer des Hauptzylinders in Verbindung steht, um dem Hauptzylinder Hydraulikfluid zuzuführen,
- einen Hydraulikfluidfüllstandsgeber (25), der zur Überwachung des Hydraulikfluidpegels im Inneren des Behälters in einer Wand des Fluidbehälters angeordnet ist, **dadurch gekennzeichnet, dass**
- der Fluidfüllstandsgeber über ein Verbindungsmittel (26) vom Behälter zum Rechner des elektrischen Stellmotors verbunden ist.

2. Hydraulische Bremsanordnung nach Anspruch 1, **dadurch gekennzeichnet, dass** der Rechner des Stellmotors Schaltkreise zum Übertragen des Signals vom Füllstandsgeber zur zentralen Steuereinheit umfasst.

3. Hydraulische Bremsanordnung nach Anspruch 1 oder 2, **dadurch gekennzeichnet, dass** der Rechner des Stellmotors Schaltkreise zum Verarbeiten des Signals vom Füllstandsgeber und Übertragen von verarbeiteten Signalen zur zentralen Steuereinheit umfasst.

4. Hydraulische Bremsanordnung nach einem der Ansprüche 1 bis 3, **dadurch gekennzeichnet, dass** der Behälter eine zum Rechner weisende Fläche umfasst, wobei das zweite Kabel aus dieser Fläche austritt.
